# EUROPEAN PATENT APPLICATION

(11) **EP 1 372 139 A1**
(43) Date of publication of application: **17.12.2003**
(21) Application number: 03252975.2
(22) Date of filing: 13.05.2003
(51) Int. Cl.: G10L 15/22

(54) **Speech recognition apparatus and program with error correction**

(30) Priority: 15.05.2002 JP 2002140550
(71) Applicant: Pioneer Corporation, Tokyo-to (JP)
(72) Inventor: Toyama, Soichi, c/o Pioneer Corporation, Tsurugashima-shi Saitama-ken (JP); Komamura, Mitsuya c/o Pioneer Corporation, Tsurugashima-shi Saitama-ken (JP); Nagaki, Koichi c/o Pioneer Corporation, Tsurugashima-shi Saitama-ken (JP); Kawazoe, Yoshihiro c/o Pioneer Corporation, Tsurugashima-shi Saitama-ken (JP); Kobayashi, Hajime c/o Pioneer Corporation, Tsurugashima-shi Saitama-ken (JP); Fujita, Ikuoa, c/o Pioneer Corporation, Kawagoe-shi, Saitama-ken (JP)
(74) Representative: Townsend, Victoria Jayne

(57) **Abstract**

A voice recognition apparatus comprises a voice input device, a recognition processing device, a judging device and a setting device. The voice input device receives a voice input from a user. The recognition processing device performs a recognition processing to determine a plurality of word candidates corresponding to the voice input, through a matching processing with respective standby words in preset standby word groups. The judging device judges as whether or not the word candidates include a correct answer. The setting device determines a combination of most recognizable candidates in the word candidates and convertible word candidates thereof and sets same for the standby word groups to be used in a next recognition processing, in case where the judging device judges that the word candidate does not include the correct answer.

## Description

### BACKGROUND OF THE INVENTION

### Field of the Invention

The present invention relates to a voice recognition technique for recognizing a human voice as input through a microphone or the like.

### Description of the Related Art

In general, a voice recognition apparatus analyzes acoustically voice input signals generated based on uttered sounds of a user, compares the voice input signals with a plurality of candidates of word-models as previously prepared to calculate the respective acoustic likelihood (i.e., similarities), and determines the candidate having the highest acoustic likelihood (hereinafter referred to as the "first candidate") as the recognition results. When the first candidate has the sufficiently high recognition reliability, the voice recognition apparatus judges that no correct recognition results exist, performs a talk-back operation with a voice message of "Please talk again" to prompt the user to give re-utterance and carries out again the recognition processing.

The conventional voice recognition apparatus has a low reliability of recognition results and carries out again the recognition processing utilizing the same candidates as those previously used, even when the user is requested to give his/her utterance again. Repeating utterance by the user in the same manner as previous utterance therefore leads to the same recognition results as those as previously obtained, with the result that the recognition rate for the re-utterance cannot remarkably be improved.

Japanese Patent No. 3112037 discloses one of the voice recognition techniques as improved in the above-mentioned problems. The recognition technique applies a narrowing process to narrow down the candidates to some candidates having high reliability, when the recognition results having sufficiently high reliability cannot be obtained through the recognition processing for the first utterance given by the user. In addition, convertible words of the candidates having high reliability, which have been obtained through the recognition processing for the first utterance, are added to the candidate and the user is prompted to give utterance again so that the recognition processing is carried out again.

However, the recognition processing cannot be performed according to the above-described method, in case where the candidates having high reliability, which have been narrowed down based on the first recognition results, include no correct answer. Even if the convertible words having high reliability are added to the candidates, use of the same word as used previously by the user makes the addition of the convertible words useless.

Japanese Laid-Open Patent Application H 11-119792 discloses another type of the voice recognition technique. According to the method described in the publication, a set of commands, which are acoustically analogous to each other (which will be referred to as the "assonance type commands") and a set of paraphrastic commands corresponding to them have been defined and stored. When the phrases "put the window up" and "draw down the window" are for example set as the assonance type commands, the phrases "open the window" and "close the window" are prepared as the paraphrastic commands relative to these assonance type commands. When a user gave utterance of the assonance type command, the user is requested to give utterance again with the use of the paraphrastic command of the former command.

In the above-mentioned method, there is need to previously set correspondence between the assonance type commands and the paraphrastic commands and store them in a memory. Accordingly, an increased number of commands to be used in the system leads to an increased storage capacity for the commands, thus causing an increased cost.

### SUMMARY OF THE INVENTION

An object of the present invention, which was made in view of the above-mentioned problems, is therefore to provide a voice recognition apparatus and. program, which permits to minimize the number of re-utterance request to a user and give an effective and accurate recognition.

In order to attain the aforementioned object, the voice recognition apparatus of the first aspect of the present invention comprises:
a voice input device for receiving a voice input from a user;
a recognition processing device for performing a recognition processing to determine a plurality of word candidates corresponding to said voice input, through a matching processing with respective standby words in preset standby word groups;
a judging device for judging as whether or not said plurality of word candidates include a correct answer; and
a setting device for determining a combination of most recognizable candidates in said plurality of word candidates and convertible word candidates thereof and setting same for said standby word groups to be used in a next recognition processing, in case where said judging device judges that said plurality of word candidate does not include the correct answer.

The above-mentioned voice recognition apparatus receives the voice input such as commands from a user, and determine word candidates corresponding to the voice input from the user, through the matching processing with the preset standby words. It is then judged as whether or not the word candidates include a correct answer. In case where the judging device judges that the word candidates include the correct answer, the word candidates are output as the recognition results. Alternatively, in case where the judging device judges that the word candidates include no correct answer, there is determined a combination of the most recognizable candidates in these word candidates and the convertible word candidates each having the same meaning of the former word candidate so as to be used in the next recognition processing. Consequently, the next recognition processing is carried out utilizing the recognizable candidates in the word candidates, which include the convertible words, thus making it possible to improve the recognition rate of re-utterance by the user.

In an embodiment of the above-mentioned voice recognition apparatus, said setting device may comprise: an analyzing unit for analyzing phonemes, which composes respective word candidates, for each of said plurality of word candidates and the convertible word candidates thereof; and a setting unit for setting a combination of word candidates, which have a smallest number of same phoneme, as said standby words.

According to such an embodiment, the word candidates including the convertible words candidates are analyzed in the aspect of phonemes, which composes the respective word candidate and the combination of word candidates, which have the smallest number of same phoneme, is used as the standby word. It is therefore possible to carry out the recognition processing in a state where the words can be distinguished form each other in the voice recognition processing.

In another embodiment of the above-mentioned voice recognition apparatus, said setting device may comprise: an analyzing unit for analyzing phonemes, which composes respective word candidates, for each of said plurality of word candidates and the convertible word candidates thereof; and a setting unit for setting a combination of word candidates, which have a smallest number of same phoneme and a largest total number of phoneme, as said standby words.

According to such an embodiment, the word candidates including the convertible words candidates are analyzed in the aspect of phonemes, which composes the respective word candidate and the combination of word candidates, which have the smallest number of same phoneme and the largest total number of phoneme, is used as the standby word. It is therefore possible to carry out the recognition processing in a state where the words can be distinguished more remarkably form each other in the voice recognition processing.

In another embodiment of the above-mentioned voice recognition apparatus, said setting device may include a standby error word in said standby word groups, said standby error word indicating that the voice input from the user corresponds to a word candidate other than the word candidates included in said standby words. According to such an embodiment, in case where the current standby words include the correct answer, the user gives utterance of the standby error word, thus making it possible to judge as whether the current standby words include the correct answer.

In further another embodiment of the above-mentioned voice recognition apparatus, said setting device may comprise a storage unit for storing the standby word groups as previously used, said setting device setting a last standby word group, which is stored in said storage unit, for the standby word groups to be used in the next recognition processing, in case where said judging device judges said standby error word as the correct answer. According to such an embodiment, it is possible to expand the range of the standby words to search for the correct answer, in case where the current standby word groups include the correct answer.

In further another embodiment of the above-mentioned voice recognition apparatus, said standby error word may be "others" and convertible words thereof.

In further another embodiment of the above-mentioned voice recognition apparatus, when the voice input from said user includes said standby error word, the word candidates other than the word candidate corresponding to said standby error ward, of the word candidates in said standby word groups at this time may be excluded from the word candidate to be included in a next standby word groups. According to such an embodiment, the standby error word indicates that the word candidates in the current standby word groups include no correct answer, with the result that it is useless to include them in the next standby word groups. Excluding the word candidates, which have been found to be incorrect answer, from the next word candidate makes it possible to narrow down the word candidates, thus obtaining effectively the correct answer.

In further another embodiment of the above-mentioned voice recognition apparatus, the apparatus may further comprises: an informing device for informing said user of the standby words, which belong to the standby word groups as set by said setting device, through at least one of output of synthesized voice and character representation, in case where said judging device judges that said plurality of word candidates includes no correct answer. According to such an embodiment, a user is informed of the standby words through the synthesized voice, thus enabling the user to easily recognize words to be uttered again.

In further another embodiment of the above-mentioned voice recognition apparatus, said judging device may ease criteria by which said word candidates are to be judged as the correct answer, every time said recognition processing is repeated. According to such an embodiment, it is possible to easily obtain the correct answer, every time the recognition processing is repeated, thus enhancing the efficiency of the recognition processing. In a preferred embodiment, said judging device may judge, when reliability of the word candidate exceeds a predetermined threshold, said word candidate as the correct answer, and decrease said threshold, every time said recognition processing is repeated.

In another aspect of the present invention, a voice recognition program is to be executed by a computer, wherein said program causes said computer to function as:
a voice input device for receiving a voice input from a user;
a recognition processing device for performing a recognition processing to determine a plurality of word candidates corresponding to said voice input, through a matching processing with respective standby words in preset standby word groups;
a judging device for judging as whether or not said plurality of word candidates include a correct answer; and
a setting device for determine a combination of most recognizable candidates in said plurality of word candidates and convertible word candidates thereof and set same for said standby word groups to be used in a next recognition processing, in case where said judging device judges that said plurality of word candidate does not include the correct answer.

Executing the above-mentioned voice recognition program by means of the computer enables the above-mentioned voice recognition apparatus to be embodied.

### BRIEF DESCRIPTION OF THE DRAWINGS

FIG. 1 is a block diagram illustrating a schematic structure of the voice recognition apparatus of the embodiment of the present invention;
FIG. 2 is a block diagram illustrating an internal structure of a re-utterance control unit as shown in FIG. 1; and
FIG. 3 is a flowchart illustrating a voice recognition processing according to the voice recognition apparatus as shown in FIG. 1.

### DETAILED DESCRIPTION OF THE PREFERRED EMBODIMENTS

Now, a preferred embodiment of the present invention will be described in detail below with reference to the accompanying drawings.

### [Structure of Voice Recognition Apparatus]

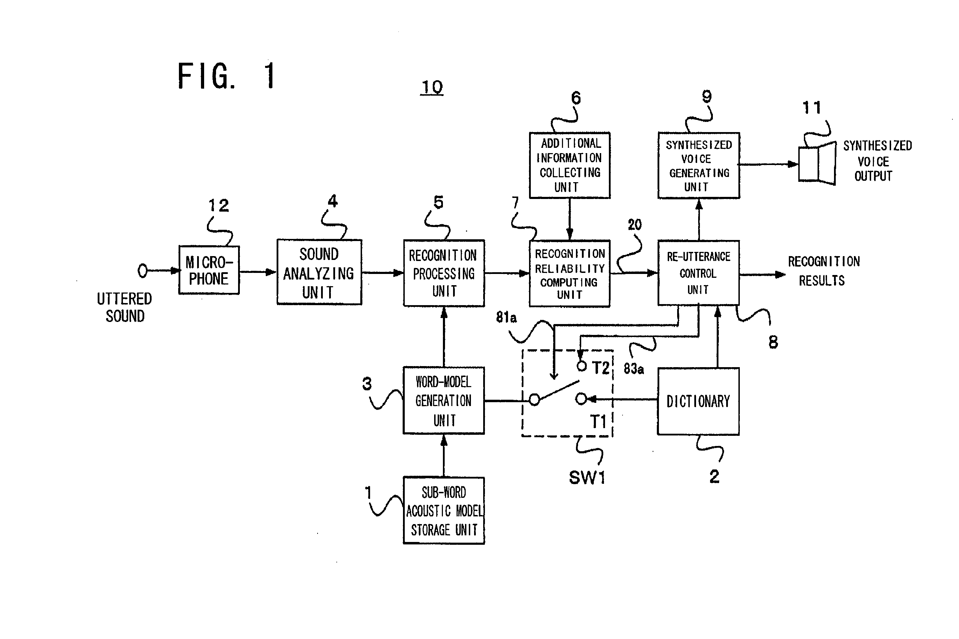

FIG. 1 shows a functional structure of the voice recognition apparatus according to the embodiment of the present invention. As shown in FIG. 1, the voice recognition apparatus 10 includes a sub-word acoustic model storage unit 1, a dictionary 2, a word-model generation unit 3, a sound analyzing unit 4, a recognition processing unit 5, an additional information collecting unit 6, a recognition reliability computing unit 7, a re-utterance control unit 8, a synthesized voice generating unit 9, a loudspeaker 11, a microphone 12 and a switch SW1.

The sub-word acoustic model storage unit 1 stores acoustic models such as phonemes as previously learned, in a sub-word unit. The "phoneme", whish is a minimum unit on the basis of which sound generated for a certain word can be analyzed and defined from distinctive functional point of view, is classified into a consonant and a vowel. The "sub-word" is a unit for composing an individual word so that a set of sub-words composes a single word. The sub-word acoustic model storage unit 1 stores the sub-word acoustic models corresponding to the respective phonemes such as vowels and consonants. In case where the word "aka" (Note: This word in the Japanese language means "red") (hereinafter referred to as "aka" (red)) is given for example, the sub-words "a", "k" and "a" compose that word.

The dictionary 2 stores word information on the words, which are to be subjected to the voice recognition processing. More specifically, combination of the sub-words for composing each of a plurality of words is stored. In case of the example word of "aka" (red), there is stored information that the sub-words "a", "k" and "a" compose that word.

The word-model generation unit 3 generates a word-model, which is an acoustic model of the respective word. More specifically, the word-model generation unit 3 generates the word-model for a certain word, utilizing the word information stored in the dictionary 2 and the sub-word acoustic model stored in the sub-word acoustic model storage unit 1. In case of the example word of "aka" (red), the fact that the sub-words "a", "k" and "a" compose the word "aka" (red) is stored as the word information in the dictionary 2. The sub-word acoustic models corresponding to the sub-words "a", "k" and "a" are stored in the sub-word acoustic model storage unit 1. Accordingly, the word-model generation unit 3 consults the dictionary 2 for the sub-words, which compose the word "aka" (red), obtains the sub-word acoustic models corresponding to these sub-words from the sub-word acoustic model storage unit 1 and combine them to generate the word-model for the word "aka" (red).

The sound analyzing unit 4 acoustically analyses the spoken voice signals, which have been input into the voice recognition apparatus 10 through the microphone 12, to convert them into a feature vector series. The recognition processing unit 5 compares the feature vector of the spoken voice, which is obtained from the sound analyzing unit 4, with the word-models generated by the word-model generation unit 3 (i.e., performs a matching processing) to calculate acoustic likelihood of the respective word-model relative to the spoken voice of the user. The word-model to be consulted in this stage will be referred to as the "word candidate". The recognition processing unit 5 performs the matching processing between the word candidates as previously set and the feature vector series corresponding to the spoken voice of the user to calculate the acoustic likelihood for the respective word candidates.

In an actual case, when the user gives utterance of a certain word, some words, which are to be expected to be uttered by a user in the current situation (which will be referred to as the "standby word"), are determined as the word candidate. After the feature vector series corresponding to the utterance by the user is obtained, there is carried out the matching processing between the feature vector series and the word candidates as previously set (i.e., the standby words) to calculate independently the acoustic likelihood relative to the respective word candidate.

The additional information collecting unit 6 collects additional information such as past utterance history of a user. In case where the voice recognition apparatus of the present invention is utilized in a command input unit of a car navigation apparatus, the additional information includes positional information of a vehicle on which the car navigation apparatus is mounted. The recognition reliability computing unit 7 calculates the recognition reliability of the respective word candidates, on the basis of the acoustic likelihood of the respective word candidates relative to the utterance of the user, which has been calculated by the recognition processing unit 5. The recognition reliability is an index indicative of a degree of likelihood with which the word candidate corresponds to the word as actually uttered by an user. With the higher recognition reliability, a probability that the word candidate is identical with the word as actually uttered by the user, and more specifically, the correct answer is obtained, will become higher. Alternatively, with the lower recognition reliability, the probability that the correct answer is obtained will become lower.

More specifically, the recognition reliability computing unit 7 subjects the acoustic likelihood of the respective word candidates, which has been calculated by the recognition processing unit 5, to a weighting with the use of the additional information obtained by the additional information collecting unit 6, so as to calculate the recognition reliability of the respective word candidates relative to the spoken voice of the user. In case where the additional information collected by the additional information collecting unit 6 includes for example a history indicative of the fact that the user frequently gave utterance of a certain word, the high recognition reliability as set is given to the same word candidate as the above-mentioned certain word. When the user gave utterance of a word relating to the current position of a vehicle, the reliability of the word can be set to be high. There is described just an example of the measures for calculating the recognition reliability. The other kind of measures for calculating the recognition reliability may be applied in the present invention.

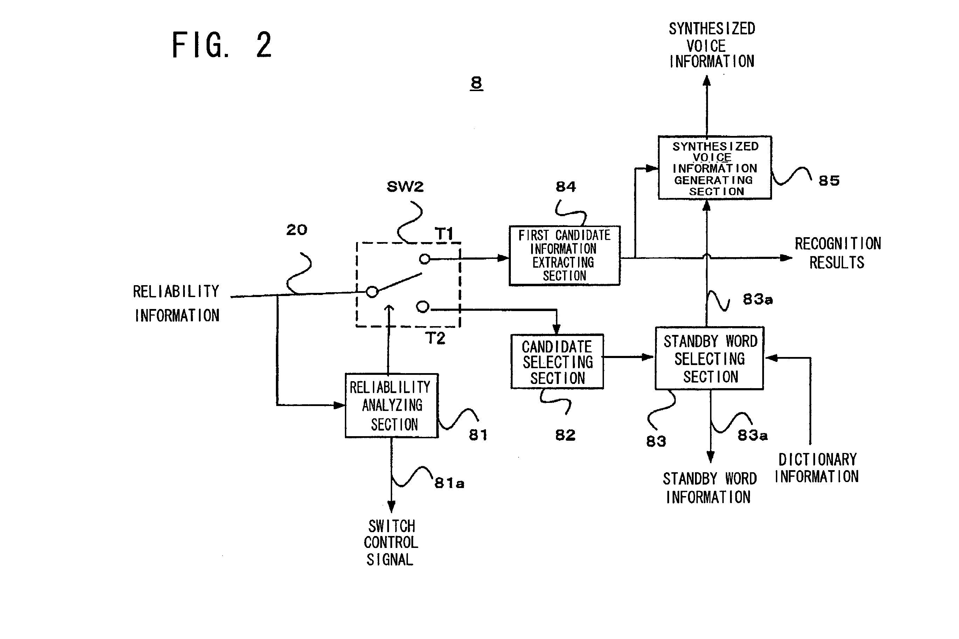

The re-utterance control unit 8, which is an element bearing a central role of the present invention, controls the word candidates during re-utterance. FIG. 2 shows an internal structure of the re-utterance control unit 8. As shown in FIG. 2, the re-utterance control unit 8 includes a reliability analyzing section 81, a candidate selecting section 82, a standby word selecting section 83, a first candidate information extracting section 84, a synthesized voice information generating section 85 and a switch SW2.

Reliability information 20 is inputted from the recognition reliability computing unit 7 into the re-utterance control unit 8. The reliability information 20 includes word candidate information, which indicates the word candidates relative to the spoken voice of the user, and recognition reliability information of the respective word candidate, which has been calculated by means of the recognition reliability computing unit 7. More specifically, the reliability information 20 is indicative of a degree of reliability of the respective word candidates.

The reliability analyzing section 81 judges as whether or not, of the word candidates included in the reliability information 20, the word candidate having the highest reliability (hereinafter referred to as the "first word candidate") can be determined as the recognition results, and more specifically, the first word candidate can be considered as the correct answer. The above-mentioned judgment can be made, for example utilizing the reliability of the first word candidate and the reliability of the second word candidate. More specifically, in case where there are satisfied two requirements, i.e., reliability of the first word candidate being sufficiently high and identical to or larger than a predetermined threshold "α" (Requirement 1) and the difference in reliability between the first word candidate and the second word candidate being sufficiently large and identical to or larger than a predetermined threshold "β" (Requirement 2), the first word candidate is judged as the correct answer. Alternatively, in case where any one of the Requirements 1 and 2 is not satisfied, the first word candidate is not judged as the correct answer. With respect to the measures to determine the first word candidate as the correct answer, the other measures than the above may be applied. Judgment as whether or not the first word candidate is the correct answer may be made for example utilizing reliability of a predetermined number "n" of the word candidates having high reliability.

In case where the first word candidate is judged as the correct answer, the reliability analyzing section 81 supplies control signals to the switch SW1 as shown in FIG. 1 as well as the switch SW2 as shown in FIG. 2 to flip the switches SW1 and SW2 to their respective terminal T1 sides. Alternatively, in case where the first word candidate is not judged as the correct answer, the reliability analyzing section 81 supplies control signals to the switches SW1 and SW2 to flip the switches SW1 and SW2 to their respective terminal T2 sides.

In case where the reliability analyzing section 81 judges the first word candidate as the correct answer, the first candidate information extracting section 84 receives the reliability information 20 from the recognition reliability computing unit 7 through the switch SW2. Then, the first candidate information extracting section 84 supplies information indicative of the first word candidate being the correct answer, information indicative of substance of the first word candidate to be judged as the correct answer and pronunciation information on the first word candidate to the synthesized voice information generating section 85. In addition, the first candidate information extracting section 84 outputs externally the information of the substance of the first word candidate as the recognition results.

In case where the first word candidate is judged as the correct answer, the synthesized voice information generating section 85 generates synthesized voice information, through which a user is to be informed of the recognition results, on the basis of information from the first candidate information extracting section 84, and outputs the thus generated synthesized voice information to the synthesized voice generating unit 9.

The synthesized voice generating unit 9 as shown in FIG. 1 generates synthesized voice including the word, which has been judged as the correct answer, on the basis of the synthesized voice information as inputted from the synthesized voice information generating section 85, and outputs the thus generated synthesized voice from the loudspeaker 11, thus informing the user of the recognition results. Informing the user of the recognition results means that, in case where the word candidate, which has been judges as the correct answer, is for example "aka" (red), the synthesized voice of "aka-desu-ne?" (Note: This phrase in the Japanese language means "That is red, isn't it?") is outputted. This enables the user to recognize the recognition results. The embodiment utilizes the measures to inform a user of the recognition results through voice input from the loudspeaker 11. Alternatively, or in addition to such measures, a user may be informed visually of the recognition results through a display unit.

Alternatively, in case where the reliability analyzing section 81 judges the first word candidate as incorrect answer, the voice recognition apparatus 10 prompts the user to give utterance again. In this case, the switch SW2 is flipped to the terminal T2 side so that the reliability information 20 is supplied to the candidate selecting section 82. The switch SW 1 is also flipped to the terminal T2 side so that the standby word selecting section 83 is electrically connected to the word-model generation unit 3. The candidate selecting section 82 applies the narrowing process to all the word candidates having the reliabilities, which have been calculated, to narrow down them to some word candidates having the high reliability (hereinafter referred to as the "correct word candidate"). In an example case, the word candidate in which difference in reliability from the first word candidate is identical to or lower than the predetermined threshold "γ" is set as the correct word candidate. Then, the distinctive information of the correct word candidate as determined is supplied to the standby word selecting section 83.

The standby word selecting section 83 determines the standby word group relative to the re-utterance of the user (i.e., the combination of the words to be used as the word candidates in the recognition processing for re-utterance of the user. The most typical way for this is to set the correct word candidate, which has been selected by the candidate selecting section 82, as the standby word. Consequently, the candidate, which had the high recognition reliability in the recognition processing for the last utterance, is set as the standby word. However, there is a possibility that the case in which the last utterance of the user is quite identical to the re-utterance thereof (for example, the utterance of "aka" (red) is merely repeated) disables the recognition results from being judged as the correct answer in the same manner as in the last utterance. In view of this problem, in the present invention, the word used as the standby word in the re-utterance is set as the different word, which is the convertible word of the correct word candidate and recognizable in the recognition processing, thus enhancing the recognition rate in the re-utterance. More specifically, the standby word selecting section 83 sets, on the basis of the correct word candidates supplied from the candidate selecting section 82, the combination of the words that are convertible words of the correct word candidates and recognizable, as the standby word for the re-utterance. A preferred example of the "combination of the recognizable words" is combination of the words, which are the convertible words of the correct word candidates, have the small number of same phoneme (Requirement A) and the large total number of phoneme (Requirement B). Reasons therefore are that, when words are acoustically compared with each other in the point of view of voice recognition, the smaller number of same phoneme and the lager total number of phoneme provide an easy recognition of the word.

The above-mentioned matters will be described below in detail. The synonyms (i.e., the convertible words), which have the same meaning, but are different from each other in pronunciation, are prepared in the dictionary 2. There is a presumption that the correct word candidates as selected by the candidate selecting section 82 are "aka" (red) and "ao" (Note: This word in the Japanese language means "blue") (hereinafter referred to as "ao" (blue)). In addition, there is a presumption that "reddo" (in which "red" is written in Roman letters) (hereinafter referred to as "reddo" (red)) is stored as the convertible word of "aka" (red) in the dictionary 2 and "buruu" (in which "blue" is written in Roman letters) (hereinafter referred to as "buruu" (blue)) is stored as the convertible word of "ao" (blue) therein. In this case, "aka" (red) and "ao" (blue) have the same phoneme of "a" and "reddo" (red) and "ao" (blue) have the same phoneme of "o". According to the Requirement A, the combination of recognizable words is a combination of "aka" (red) and "buruu" (blue), or a combination of "reddo" (red) and "buruu" (blue). In addition, taking into consideration the Requirement B, of these combinations, the combination of "reddo" (red) and "buruu" (blue) has the larger total number of phoneme. The combination of "reddo" (red) and "buruu" (blue) is finally set as the standby words. In the other example in which "mizuiro" (Note: This word in the Japanese language means "light blue") (hereinafter referred to as "mizuiro" (light blue)) is further stored as the convertible term of "ao" (blue) in the dictionary 2, of the combination of the words having the smallest number of same phoneme, the combination of "aka" (red) and "mizuiro" (light blue) having the largest total number of phoneme is set as the standby words. In the present invention, of the correct word candidates and the convertible words thereof, the most recognizable words are set as the standby words for the next re-utterance in this manner, thus improving recognition accuracy in the recognition processing for the re-utterance.

In addition, in the present invention, words such as "others", "other than" and "different", which are indicative that the word included in talk-back to prompt a user to give re-utterance is not identical with the correct word, are included in the talk-back to prompt the user to give re-utterance. Accordingly, in case where the words with which the user was prompted to give re-utterance through the talk-back did not include the correct answer, the voice recognition apparatus 10 can realize that state. There is a presumption that the recognition results for the first utterance narrows down the correct word candidates to "aka" (red) and "ao" (blued), and further "aka" (red) and "mizuiro" (light blued) are finally set as the standby word. In such a case, in the talk-back to prompt a user to give re-utterance, the voice recognition apparatus 10 asks the user, for example, "aka-desu-ka?, mizuiro-desu-ka? or others" (Note: This phrase in the Japanese language means "Is that red, light blue or others?"). When the user gives utterance of "others" in response to the talk-back, it is recognized that the word uttered by the user is neither "aka" (red) nor "mizuiro" (light blue). Consequently, the voice recognition apparatus 10 realizes the last narrowing to be incorrect, thus making it possible to search for the word candidates other than "aka" (red) and "mizuiro" (light blue).

The standby word selecting section 83 supplies, as the standby word information 83a, the information, which includes the number of the standby word candidates for re-utterance, and pronunciation and meaning (reading of the basic word) thereof, to the word-model generation unit 3 through the switch SW1 as well as to the synthesized voice information generating section 85. In this case, the word-model generation unit 3 generates the word-models for the standby words included in the standby word information 83a so as to enable these word-models to be used in the matching processing by the recognition processing unit 5 during the recognition processing for re-utterance. More specifically, in the above-described example, the word-models of "aka" (red), "mizuiro" (light blue) and "others" are subjected to the matching processing in the recognition processing of the words as re-uttered. The synthesized voice information generating section 85 generates synthesized voice information of ""aka-desu-ka?, mizuiro-desu-ka? or others" (Note: This phrase in the Japanese language means "Is that red, light blue or others?") in the form of talk-back to prompt the user to give re-utterance, based on the standby word information 83a. The synthesized voice information is outputted from the loudspeaker 11 in the form of synthesized voice by means of the synthesized voice generating unit 9.

The voice recognition apparatus 10 causes the combination of recognizable words in the correct word candidates to be included in the talk-back and further the words such as "others", which are indicative that these words are other than the recognizable words, to be included therein, so as to prompt the user to give re-utterance. This makes it possible to enhance recognition accuracy during the re-utterance.

In case where the first word candidate cannot still be judged as the correct answer even in the recognition processing after re-utterance, the same re-utterance processing may be repeated. With respect to the re-utterance processing, the reliability analyzing section 81 may gradually ease the threshold, which is to be used when judging the first word candidate as the correct answer, thus facilitating judgment for the correct answer.

In case where the word candidate, which corresponds to the word "others", is judges as the correct answer during re-utterance (including a plurality of time of re-utterance), and in other words, the user judges that the current standby word candidates designated in the talk-back include no correct answer, the standby word selecting section 83 causes the standby words to return to the last state of utterance. Reasons for it will be stated below. In case where the first word .candidate is judged as incorrect answer in the recognition processing for the "m"th utterance for example, the standby words for the "(m+1)"th utterance are narrowed down only to the candidate having high reliability. However, the user's utterance of "others" in the "(m+1)"th utterance means that the standby word candidate set at this stage include no correct words, and that there exists an error in the narrowing processing (i.e., a standby error). Accordingly, the standby word is returned to the state in which the narrowing processing has not as yet been carried out (i.e., the "m"th utterance state) to expand the range of the word candidates, and prompt the user to give re-utterance, as an occasion demands.

In this case, the reliability analyzing section 81 causes the switches SW1 and SW2 to be flipped to their respective terminal T2 sides. The standby word selecting section 83 stores the last standby word group, when determining the standby word group for the nest utterance. More specifically, the standby word selecting section 83, which has stored all the past standby word groups, utilizes the last standby word group in the recognition processing for the next utterance, when there is a standby error.

In case where, after repetition of re-utterance as required, the reliability analyzing section 81 finally judges a certain first word candidate as the correct answer, the first word candidate is sent as the recognition results from the voice recognition apparatus 10 to an external apparatus. The external apparatus is an apparatus, which utilizes the recognition results from the voice recognition apparatus 10 as commands. When the voice recognition apparatus 10 is utilized in the input unit of the car navigation apparatus as described above, the recognition results are supplied to a controller of the car navigation apparatus so as to execute processing corresponding to the contents (i.e., the commands).

### [Voice Recognition Processing]

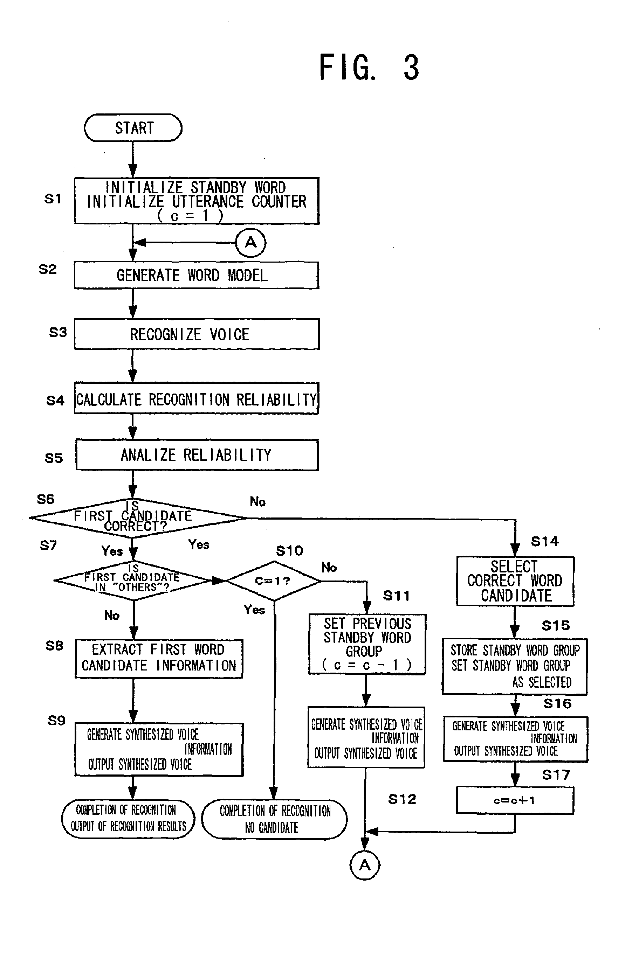

Now, the voice recognition processing executed by the above-described voice recognition apparatus 10 will be described with reference to FIG. 3. FIG. 3 is a flowchart of the voice recognition processing.

First, in Step S 1, there is executed initialization for recognition of the first utterance of a user. More specifically, the re-utterance control unit 8 causes the switch SW1 to be flipped to the terminal T1 side so as to set all the words in the dictionary 2 in which the word candidate information for recognition has been stored, as the standby words for the first utterance. An utterance counter "c" is set at "1". The utterance counter is indicative of the standby word group for the utterance to be recognized. More specifically, the utterance counter of "c=1" corresponds to the standby word group for the first utterance (i.e., all the words stored in the dictionary 2 in the above-described example), and the utterance counter of "c=2" corresponds to the standby word group, which has been subjected to the single narrowing processing after the first utterance.

Then, in Step S2, the word-model generation unit 3 generates the word-models, utilizing the sub-word acoustic models stored in the sub-word acoustic model storage unit 1. Consequently, there are prepared all the word-models corresponding to the standby word groups for the first utterance.

Then, in Step S3, the voice recognition processing is carried out. More specifically, a user gives utterance so that the corresponding spoken voice signals are inputted into the sound analyzing unit 4 through the microphone 12. The sound analyzing unit 4 acoustically analyzes the spoken voice signal to obtain the feature vector series. The recognition processing unit 5 executes the matching process between the feature vector of the spoken voice signals and the respective word-models as prepared in Step S2, to calculate the acoustic likelihood between them for each of the word-models.

Then, in Step S4, the recognition reliability computing unit 7 subjects the acoustic likelihood of the respective word candidates, which has been calculated by the recognition processing unit 5, to a weighting with the use of the additional information collected by the additional information collecting unit 6, so as to calculate the recognition reliability of the respective word candidates. The additional information includes the past utterance history of a user and positional information of a vehicle on which the car navigation apparatus is mounted.

Then, in Step S5, the reliability analyzing section 81 analyses as whether or not the first word candidate having the highest recognition reliability is a correct answer on the basis of the recognition reliability of the respective word candidates. This analysis can be made for example utilizing the reliability of the first word candidate and the reliability of the second word candidate as mentioned above.

Then, in Step S6, the reliability analyzing section 81 judges as whether or not the first word candidate is the correct answer, on the basis of the analysis results in Step S5. In case where the first word candidate is judged as the correct answer, the processing advances to Step S7. Alternatively, in case where the first word candidate is judged as the incorrect answer, the processing advances to Step S 14.

In case where the first word candidate is judged as the correct answer in Step S6, the reliability analyzing section 81 judges in Step S7 as whether or not the above-mentioned first word candidate is a word corresponding to "others". The word candidate corresponding to "others" is used to correct the standby word group in case where the correct word is excluded from the standby words due to the narrowing processing of the standby words, as described above. When the first word candidate corresponds to "others", the processing advances to Step S10. Alternatively, when the first word candidate does not correspond to "others", the processing advances to Step S8.

Advance of the processing to Step S8 means that the first word candidate is the correct answer, but is not the word candidate of "others". More specifically, it is reasonable to determine the first word candidate as the recognition result. Accordingly, the first candidate information extracting section 84 extracts the first word candidate from the reliability information 20, supplies information indicative that the first word candidate is the correct answer, information indicative of substance of the first word candidate as judged as the correct answer and pronunciation information corresponding to the first word candidate to the synthesized voice information generating section 85, and outputs as the recognition results, the information indicative of the substance of the first word candidate to the outside.

In Step S9, the synthesized voice information generating section 85 generates synthesized voice information and supplies it to the synthesized voice generating unit 9 so that the synthesized voice generating unit 9 outputs the reading of the first word candidate in the form of synthesized voice from the loudspeaker 11. In case where the first word candidate is "aka" (red) for example, the synthesized voice of "aka-desu-ne?" (Note: This phrase in the Japanese language means "That is red, isn't it?") is outputted from the loudspeaker, thus informing the user of the recognition results.

In case where the first word candidate is judged as the incorrect answer in Step S6, the candidate selecting section 82 selects the correct word candidates in Step S 14. More specifically, the candidate selecting section 82 selects the correct word candidates utilizing the recognition reliability of the first word candidate. The above-mentioned processing subjects the word candidates to be used in the recognition processing for the next utterance to the narrowing processing.

Then, in Step S15, the standby word selecting section 83 generates a combination of recognizable words having different pronunciations from each other, on the basis of the correct word candidates as selected by the candidate selecting section 82. More specifically, the standby word selecting section 83 determines, as the standby words, the word candidates, which have the smallest number of same phoneme and the largest total number of phoneme, of the combination of the convertible words corresponding to the correct word candidate. The standby word group including these standby words is then set. The standby word group includes the words corresponding to "others", in addition to the above-mentioned words. Then, the standby word selecting section 83 obtains word information corresponding to these standby words from the dictionary 2 and sends it to the word-model generation unit 3 to generate the corresponding word-models. The standby word group is updated in this manner.

The standby word selecting section 83 stores the standby word group, which has not as yet been updated. The reason is that, when the user gives utterance of "others" in the next utterance, there is a need to use again the last standby word group. The standby word selecting section 83 also supplies the standby word group as selected to the synthesized voice information generating section 85.

In Step S16, the synthesized voice information generating section 85 and the synthesized voice generation unit 9 output, as the talk-back to prompt the user to give re-utterance, the synthesized voice for the standby word as determined in Step S15. In case where "aka" (red), "ao" (blue) and "others" are determined for example as the standby words in Step S 15, the synthesized voice of "aka-desu-ka? ao-desu-ka? or others" (Note: This phase in the Japanese language means "Is that red, blue or others?") is outputted.

Then, in Step S 17, the utterance counter "c" is incremented by "1". As a result, the utterance counter "c" as incremented becomes to be indicative that the standby word group has been shifted to the first updated state relative to the last standby word group. Then, the processing returns to Step S2 so that the word-models of the words included in the standby word group, which is determined in Step S 15, are generated and the recognition processing for the re-utterance is carried out.

Judgment in Step S7 that the first word candidate corresponds to "others" is indicative that the standby word group at this stage includes no correct word, and namely, there is a standby error. Accordingly, the processing advances to Step S10 so as to judge as whether or not the value of the utterance counter "c" is "1". In case of the utterance counter "c=1", the current recognition processing is carried out for the first utterance and the combination of the standby words at this stage is set for all the word candidates included in the dictionary 2. This is indicative that the dictionary 2 does not intrinsically include the word uttered by the user. In such a case, there is no candidate, resulting in termination of the recognition processing.

Alternatively, in case where the utterance counter "c" is not "1", the processing advances to Step S 11. In Step S 11, the standby word selecting section 83 subtracts the value of utterance counter "c" by "1" so as to set the last standby word group as previously stored. The user's utterance of "others" is indicative that the current standby word group does not include the correct word. In view of this fact, a returning step to the standby word group, which has been utilized in the last recognition processing, is carried out to execute the recognition processing again. The standby word selecting section 83 stores, after completion of updating of the standby words in Step S14, the standby word group, which has not as yet been updated. Accordingly, reading out such a standby word group and setting it suffice. At this stage, the standby word selecting section 83 causes the words corresponding to "others" (hereinafter referred to as the "standby error word") to be included in the standby word group.

Then, in Step S12, the standby word selecting section 83 supplies the standby word group thus determined to the word-model generation unit 3 and the synthesized voice information generating section 85. The word-model generation unit 3 generates the word-models corresponding to these standby words so as to be utilized in the next recognition processing. The synthesized voice information generating section 85 and the synthesized voice generating unit 9 output the synthesized voice corresponding to the word, utilizing the information on the standby words as supplied.

The recognition processing is carried out in the manner as described above, while updating the standby word group in accordance with the contents of the user's utterance until the first word candidate is judged as the correct answer and the first word candidate is outputted as the recognition results (Step S9) or there is no candidate, resulting in termination of the recognition processing (Yes in Step S10). In case where the reliability of the first word candidate is too low to judge it as the correct answer, the standby words is subjected to the narrowing processing based on the reliability. In addition, combination of words, which are the convertible words of the words to which the standby words have been narrowed down, and acoustically recognizable, is set as the standby words for the next utterance, so as to update the standby word group. Recognition rate for the re-utterance can therefore be improved, thus making it possible to rapidly and effectively recognize the spoken voice by the user.

### [Modification]

In the re-utterance control unit 8 as shown in FIG. 2, the reliability analyzing section 81 determines as whether or not the first word candidate is the correct answer, utilizing the first word candidate and the second word candidate. Alternatively, it may be configured that the reliability analyzing section 81 determines as whether or not the first word candidate is the correct answer, utilizing the top "n" word candidates having the high recognition reliability. In this case, the top "n" word candidates having the high recognition reliability are determined during judging as whether or not the first word candidate is the correct answer. At the time when the top "n" word candidates having the high recognition reliability are determined, it is possible to set them as the correct word candidates after completion of the narrowing processing. This enables the reliability analyzing section 81 to execute the processing of the candidate selecting section 82, thus leading to a possible omission of the candidate selecting section 82. In this case, the information on the correct word candidates is inputted from the reliability analyzing section 81 to the standby word selecting section 83.

In the voice recognition processing as shown in FIG. 3, the first word candidate is judged to be correspond to "others" in Step S7, and in case where the utterance counter "c" is judged to be other than "1", the value of the utterance counter is subtracted by "1" so as to utilize the last standby word group for the next utterance. However, judgment in Step S7 of "Yes" is indicative that the last standby word group did not include the correct word, with the result that it is useless to include these words in the next standby word group. The user's utterance of "others" in the standby word group of "aka" (red), "ao" (blue) and "others" is indicative that the word uttered by the user is neither "aka" (red) nor "ao" (blue). Accordingly, the standby word selecting section 83 permits to exclude "aka" (red) and "ao" (blue) and their convertible words from the last standby word group as obtained in Step S 11, to set the standby word group. This enables the words, which have been clearly revealed to be incorrect, to be excluded from the standby word group, thus making it possible to achieve more effectively the recognition processing.

The structural components of the above-described voice recognition apparatus 10 may be configures in the form of computer program so that execution of the program in an equipment provided with a computer makes it possible to realize the above-described voice recognition apparatus 10. For example, application of the above-mentioned computer program to a car navigation apparatus or an audio-visual equipment provided with the computer makes it possible to achieve the voice input function.

In the above-described embodiments, the combination of the most recognizable candidates in the correct answer candidates and the convertible word candidates thereof is set for the standby words to be used in the next recognition processing. However, the combination of the most recognizable candidates may be determined only from the convertible word candidates of the correct answer candidates.

In addition, the standby error word indicating that the word, which is included in the talk-back to prompt the user to give re-utterance, corresponds to a word other than the correct answer word, is also added to the correct answer candidates and the convertible word candidates thereof, so as to determine the combination of the most recognizable candidates.

According to the present invention as described in detail, it is possible to reduce a possibility of error recognition by prompting a user to give re-utterance in case of the larger possibility that the recognition results are error. In case where there cannot be made judgment that the recognition results for a certain utterance is the correct answer, words, which are the convertible words of the standby words that have been actually utilized, and acoustically recognizable, are set as the standby words for the next utterance, so as to avoid repetition of the same recognition results, thus improving recognition rate for the next utterance. In addition, the words such as "others", which are indicative of words other than the current standby word, are included in the talk-back to prompt a user to give re-utterance, so as to remove the incorrect words, thus reaching the correct answer in an effective and rapid manner.

## Claims

1. A voice recognition apparatus comprising:
a voice input device (12) for receiving a voice input from a user;
a recognition processing device (5) for performing a recognition processing to determine a plurality of word candidates corresponding to said voice input, through a matching processing with respective standby words in preset standby word groups;
a judging device for judging as whether or not said plurality of word candidates include a correct answer; and
a setting device (8) for determining a combination of most recognizable candidates in said plurality of word candidates and convertible word candidates thereof and setting same for said standby word groups to be used in a next recognition processing, in case where said judging device judges that said plurality of word candidate does not include the correct answer.

2. The apparatus as claimed in Claim 1, wherein:
said setting device (8) comprises:
an analyzing unit (4) for analyzing phonemes, which composes respective word candidates, for each of said plurality of word candidates and the convertible word candidates thereof; and
a setting unit for setting a combination of word candidates, which have a smallest number of same phoneme, as said standby words.

3. The apparatus as claimed in Claim 1, wherein:
said setting device (8) comprises:
an analyzing unit (4) for analyzing phonemes, which composes respective word candidates, for each of said plurality of word candidates and the convertible word candidates thereof; and
a setting unit for setting a combination of word candidates, which have a smallest number of same phoneme and a largest total number of phoneme, as said standby words.

4. The apparatus as claimed in any one of Claims 1 to 3, wherein:
said setting device (8) includes a standby error word in said standby word groups, said standby error word indicating that the voice input from the user corresponds to a word candidate other than the word candidates included in said standby words.

5. The apparatus as claimed in Claim 4, wherein:
said setting device (8) comprises a storage unit for storing the standby word groups as previously used, said setting device (8) setting a last standby word group, which is stored in said storage unit, for the standby word groups to be used in the next recognition processing, in case where said judging device judges said standby error word as the correct answer.

6. The apparatus as claimed in Claim 4 or 5, wherein:
said standby error word is "others" and convertible words thereof.

7. The apparatus as claimed in any one of Claims 4 to 6, wherein:
when the voice input from said user includes said standby error word, the word candidates other than the word candidate corresponding to said standby error ward, of the word candidates in said standby word groups at this time are excluded from the word candidate to be included in a next standby word groups.

8. The apparatus as claimed in any one of Claims 1 to 7, further comprising:
an informing device for informing said user of the standby words, which belong to the standby word groups as set by said setting device (8), through at least one of output of synthesized voice and character representation, in case where said judging device judges that said plurality of word candidates includes no correct answer.

9. The apparatus as claimed in any one of Claims 1 to 8, wherein:
said judging device eases criteria by which said word candidates are to be judged as the correct answer, every time said recognition processing is repeated.

10. The apparatus as claimed in Claim 9, wherein:
said judging device judges, when reliability of the word candidate exceeds a predetermined threshold, said word candidate as the correct answer, and decreases said threshold, every time said recognition processing is repeated.

11. A voice recognition program to be executed by a computer, wherein said program causes said computer to function as:
a voice input device (12) for receiving a voice input from a user;
a recognition processing device (5) for performing a recognition processing to determine a plurality of word candidates corresponding to said voice input, through a matching processing with respective standby words in preset standby word groups;
a judging device for judging as whether or not said plurality of word candidates include a correct answer; and
a setting device (8) for determine a combination of most recognizable candidates in said plurality of word candidates and convertible word candidates thereof and set same for said standby word groups to be used in a next recognition processing, in case where said judging device judges that said plurality of word candidate does not include the correct answer.

12. The apparatus as claimed in Claim 4, wherein:
said setting device (8) determines the combination of most recognizable candidates in said plurality of word candidates, convertible word candidates thereof and said standby error word and sets same for said standby word groups to be used in the next recognition processing.

13. A voice recognition apparatus comprising:
a voice input device (12) for receiving a voice input from a user;
a recognition processing device (5) for performing a recognition processing to determine a plurality of word candidates corresponding to said voice input, through a matching processing with respective standby words in preset standby word groups;
a judging device for judging as whether or not said plurality of word candidates include a correct answer; and
a setting device (8) for determining a combination of most recognizable candidates in convertible word candidates of said plurality of word candidates and setting same for said standby word groups to be used in a next recognition processing, in case where said judging device judges that said plurality of word candidate does not include the correct answer.

14. The apparatus as claimed in Claim 13, wherein:
said setting device (8) comprises:
an analyzing unit (4) for analyzing phonemes, which composes respective word candidates, for each of the convertible word candidates of said plurality of word candidates; and
a setting unit for setting a combination of word candidates, which have a smallest number of same phoneme, as said standby words.

15. The apparatus as claimed in Claim 13, wherein:
said setting device (8) comprises:
an analyzing unit (4) for analyzing phonemes, which composes respective word candidates, for each of the convertible word candidates of said plurality of word candidates; and
a setting unit for setting a combination of word candidates, which have a smallest number of same phoneme and a largest total number of phoneme, as said standby words.

16. The apparatus as claimed in any one of Claims 13 to 15, wherein:
said setting device (8) includes a standby error word in said standby word groups, said standby error word indicating that the voice input from the user corresponds to a word candidate other than the word candidates included in said standby words.

17. The apparatus as claimed in Claim 16, wherein:
said setting device (8) comprises a storage unit for storing the standby word groups as previously used, said setting device (8) setting a last standby word group, which is stored in said storage unit, for the standby word groups to be used in the next recognition processing, in case where said judging device judges said standby error word as the correct answer.

18. The apparatus as claimed in Claim 16 or 17, wherein:
said standby error word is "others" and convertible words thereof.

19. The apparatus as claimed in any one of Claims 16 to 18, wherein:
when the voice input from said user includes said standby error word, the word candidates other than the word candidate corresponding to said standby error ward, of the word candidates in said standby word groups at this time are excluded from the word candidate to be included in a next standby word groups.

20. The apparatus as claimed in any one of Claims 13 to 19, further comprising:
an informing device for informing said user of the standby words, which belong to the standby word groups as set by said setting device (8), through at least one of output of synthesized voice and character representation, in case where said judging device judges that said plurality of word candidates includes no correct answer.

21. The apparatus as claimed in any one of Claims 13 to 20, wherein:
said judging device eases criteria by which said word candidates are to be judged as the correct answer, every time said recognition processing is repeated.

22. The apparatus as claimed in Claim 21, wherein:
said judging device judges, when reliability of the word candidate exceeds a predetermined threshold, said word candidate as the correct answer, and decreases said threshold, every time said recognition processing is repeated.

23. A voice recognition program to be executed by a computer, wherein said program causes said computer to function as:
a voice input device (12) for receiving a voice input from a user;
a recognition processing device (5) for performing a recognition processing to determine a plurality of word candidates corresponding to said voice input, through a matching processing with respective standby words in preset standby word groups;
a judging device for judging as whether or not said plurality of word candidates include a correct answer; and
a setting device (8) for determine a combination of most recognizable candidates in convertible word candidates of said plurality of word candidates and set same for said standby word groups to be used in a next recognition processing, in case where said judging device judges that said plurality of word candidate does not include the correct answer.

24. The apparatus as claimed in Claim 13, wherein:
said setting device (8) determines the combination of most recognizable candidates in the convertible word candidates of said plurality of word candidates and said standby error word and sets same for said standby word groups to be used in the next recognition processing.
